# EUROPEAN PATENT SPECIFICATION

(11) **EP 3 908 452 B1**
(45) Date of publication and mention of the grant of the patent: **10.07.2024**
(21) Application number: 19705987.6
(22) Date of filing: 08.01.2019
(51) Int. Cl.: B29C 65/04, B29C 65/48, B29C 65/72, B29C 65/74, B60N 3/04, B60R 22/14, B29L 31/30, B29K 27/06, B29K 67/00

(54) **CAR MATS AND SIMILAR ARTICLES FOR USE IN VEHICLES**
AUTOMATTEN UND ÄHNLICHE GEGENSTÄNDE ZUR VERWENDUNG IN FAHRZEUGEN
TAPIS DE VOITURE ET ARTICLES SIMILAIRES DESTINÉS À ÊTRE UTILISÉS DANS DES VÉHICULES

(43) Date of publication of application: 17.11.2021
(73) Proprietor: Kimsey, Paul, Woodhall Spa, Lincolnshire LN10 6QH (GB)
(72) Inventor: Kimsey, Paul, Woodhall Spa, Lincolnshire LN10 6QH (GB)
(74) Representative: Craske, Stephen Allan
(86) International application number: PCT/GB2019/050041
(87) International publication number: WO 2020/144444

(56) References cited:
- WO-A1-98/25755
- GB-A- 2 533 149
- JP-A- H01 159 234
- JP-A- S58 152 634
- JP-A- S60 185 646
- JP-B2- 2 519 491
- US-A- 6 030 490

## Description

### TECHNICAL FIELD OF THE INVENTION

This invention relates to articles such as, without limitation, car mats, seat belt covers, boot liners and the like, and more specifically to such articles which are intended for use in vehicles with a leather or synthetic leather trim.

### BACKGROUND

Many vehicles towards the upper end of the price range have real leather seat coverings and internal upholstery. The production of artificial leathers has also evolved to the point where high quality synthetic leather coverings and trims may be used where real leather is unsuitable, or undesirable for ethical reasons. Poromeric or "breathable" imitation leathers may typically have a polyurethane coating applied to a fibrous base layer, typically polyester.

Removable car mats are almost universally used in the foot wells of a vehicle. Although leather mats are available in some countries they are expensive items, and few people would want to spend a lot of money on an item which is very likely to be heavily soiled after a few weeks use. The market has yet to see a vehicle mat or similar accessory which matches the durability and quality of real leather upholstery at an affordable price.

It has been known for several decades to attach an overlay, e.g. a pvc sheet, to a base layer such as fibrous mat using high frequency welding (HFW). In the vast majority of cases the overlay is inset from the peripheral edges of the base mat. Examples of such processes are disclosed in GB 2 344 758-A and US6030490**.** Similar processes are disclosed in JPS60185646A**,** JPH01159234A**,** JPS58152634A and WO98/25755A.

In a more recent patent specification, GB 2 533 149-A**,** it is disclosed that significant manufacturing advantages can be achieved by using a single HFW die to attach a standard size overlay to a variety of different shapes and sizes of base mat. The overlay overhangs at least one edge of the mat during the HFW process and the overhanging portions are then trimmed off before applying an edge binding to the mat.

Again, in most known examples the overlay is attached to the base layer by one or more continuous welding areas. In US 6 030 490 for example, the die has a single continuous welding area, or "relief feature", which is shaped to coincide with the overlay to be applied thereby ensuring firm attachment. However, when part of the overlay overhangs as in GB 2 533 149-A the thermal mass of the overhanging portions is different from the areas which overlie the base mat and there may be a danger of arcing, overheating and wasted energy during the welding process.

### SUMMARY OF THE INVENTION

When viewed from one aspect the present invention proposes a method of manufacturing an article for use in a vehicle:
- pre-forming a base layer (2) from a sheet which includes a flexible fibrous material to provide the base layer with a defined peripheral profile;
- placing an overlay (3) of smooth non-porous polymer material onto an HFW (high frequency welding) die, said HFW die having an upper contact surface which includes active welding areas for contact with the overlay and inset non-active areas which are spaced from the overlay;
- covering the overlay with a hot melt adhesive laminate (40);
- placing the pre-formed base layer onto the hot melt adhesive laminate such that the overlay covers at least part of the pre-formed base layer;
- placing a metal contact plate (42) onto the base layer above the HFW die;
- applying electrical power to the HFW die to cause the hot melt adhesive laminate to melt and bond areas of the overlay in contact with the active welding areas of the die to the corresponding overlying areas of the pre-formed base layer;
- wherein the active welding areas of the HFW die comprise lines (25, 26; 37) of discrete active welding areas (30) which are separated by spaces (31);
*characterised in that* the pre-formed base layer (2) is positioned such that the overlay (3) extends beyond at least one peripheral edge of the base layer.

The configuration of the die ensures that the overlay becomes firmly bonded to the base layer whilst any areas of the die which lie outside the periphery of the base layer are not susceptible to localised electrical effects.

The invention also provides an article for use in a vehicle:
- a base layer (2) which includes a flexible fibrous material, said base layer having a defined peripheral profile;
- an overlay (3) of smooth non-porous polymer material which is bonded by HFW (high frequency welding) to selected areas of the flexible fibrous material using a hot melt adhesive (40);
- wherein the overlay has lines (25, 26) of discrete welding areas (30) which are separated by spaces (31);
*characterised in that* the overlay is bonded to an area of the base layer which extends up to at least part of the peripheral profile of the base layer.

### BRIEF DESCRIPTION OF THE DRAWINGS

The following description and the accompanying drawings referred to therein are included by way of non-limiting example in order to illustrate how the invention may be put into practice. In the drawings:
Figure 1 is a plan view of a car mat;
Figure 2 is a top view of a first HFW tool for use in a method of manufacturing the car mat;
Figure 3 is a detailed section III-III through part of the HFW tool of Fig. 2;
Figure 4 is a side view of the section III-III looking from the left in Fig. 3;
Figure 5 is is a top view of a second HFW tool for use in a method of manufacturing the car mat;
Figure 6 is a diagrammatic section through part of the first HFW tool together with the various layers which are used in a method of manufacturing the car mat;
Figure 7 is a section through a third HFW tool for use in a method of manufacturing the car mat; and
Figure 8 is is a diagrammatic section through part of the third HFW tool together with the various layers which are used in a method of manufacturing the car mat.

### DETAILED DESCRIPTION OF THE DRAWINGS

It should firstly be noted that the sectional drawings included herewith are diagrammatic and are not necessarily in proportion.

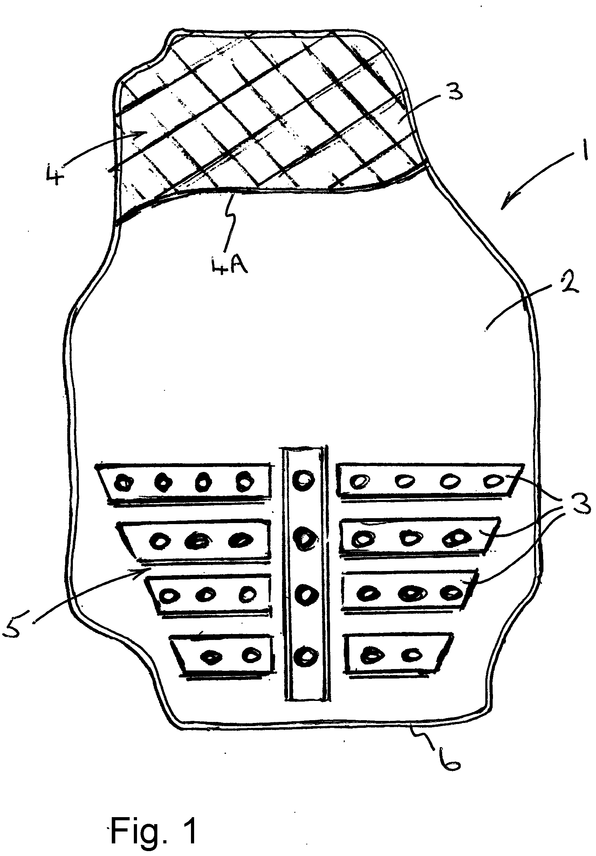

Referring firstly to **Fig. 1****,** the drawing illustrates a typical car floor mat 1 having a base layer 2 of flexible fibrous carpet material which, in one embodiment, may comprise polyester fibres bonded to a rubberised backing sheet. The base layer is pre-cut to a defined peripheral profile to fit in the foot well of a vehicle, but the required profile may vary considerably from one vehicle to another. The mat could also be configured to fit in the boot, or a moulded boot liner, of the vehicle. In this embodiment the upper surface of the base layer 2 is partially covered by an overlay 3 to provide an additional durable covering in areas which are most likely to suffer wear and soiling. These areas will also vary from one vehicle to another, but in the illustrated embodiment there is a peripheral area 4 which lies underneath the foot pedals of the vehicle and an inset area 5 which lies at the bottom of the foot well. In the area 4 the overlay 3 extends right up to one continuous peripheral edge portion of the base layer 2, but in other embodiments the overlay could extend between two or more separate edge portions of the base layer. The inset area 5 may comprise one or more discrete areas arranged in a pattern to match or compliment the trim pattern of the vehicle. None of the discrete areas within the inset area 5 adjoin the peripheral edge of the base layer 2. The peripheral edges of the mat are covered with an edge binding 6 which extends around the entire periphery of the base layer 2. The binding may be attached by sewing or other appropriate means, providing a neat finish to the mat and neatly covering the rough cut edges at the periphery of the mat.

To manufacture the mat 1 the base layer 2 is first pre-cut to the required peripheral profile using a suitable die or template. The overlay 3 from which the areas 4 and 5 are formed may comprise one or more sheets of hard-wearing non-porous waterproof polymer sheet, preferably a vinyl material, particularly polyvinyl chloride (pvc), and vinyl co-polymers. The overlay 3 may have at least one surface which is textured to mimic the creases and pits found in real leather. The piece or pieces of overlay 3 are bonded to the base layer 2 using a hot melt adhesive and high frequency welding (HFW). The processes involved in attachment of the peripheral area 4 and inset area 5 are somewhat different, and each will now be described in detail.

### PERIPHERAL AREAS:

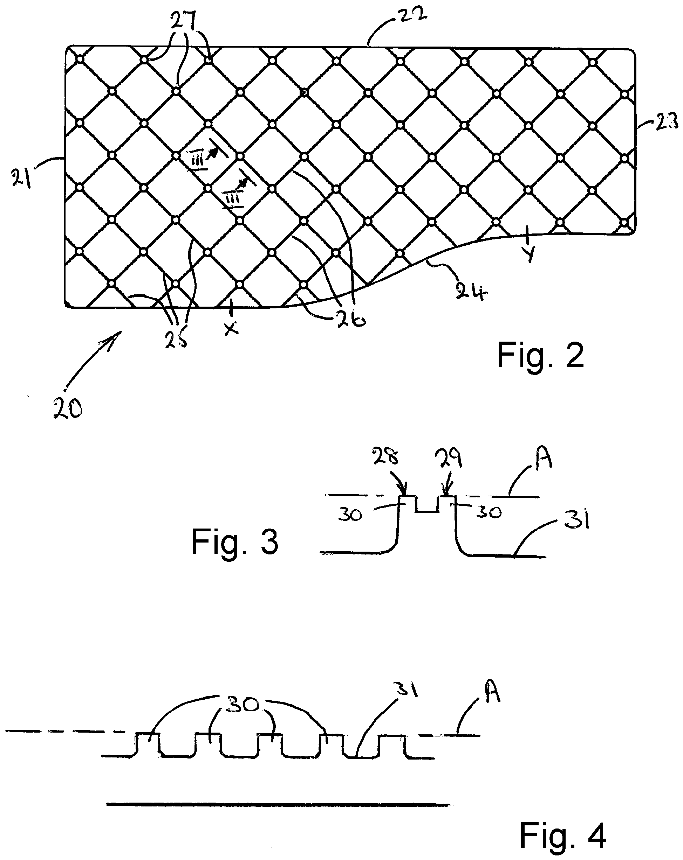

The peripheral areas 4 are produced using a first purpose-made HFW tool, an embodiment of which is shown in **Fig. 2****.** The HFW tool 20 is of a suitable size and shape to cover the peripheral area 4, extending beyond the peripheral areas of the base layer 2. A single tool which is larger than the peripheral area 4 of the largest mat to be produced can be used with any smaller mat. The tool shown in **Fig. 2** has three straight edges 21-23 and a fourth edge 24 which is shaped to form a curved edge 4A which extends across the base layer, as seen in **Fig. 1****.** In this embodiment part of the curved edge 24 which extends between the points X and Y forms the curved edge 4A but it will be appreciated that this can be varied depending on the desired shape of the peripheral area 4. It will be noted that the upper contact surface of the tool 20 also incorporates an intersecting pattern of two sets of parallel lines 25 and 26, **Fig. 2****,** with circles 27 formed at each of the points of intersection. When viewed in greater detail as in the sectional views of **Fig.s 3 and 4****,** it can be seen that the lines 25, 26 each comprise two parallel rows 28 and 29 of flat-headed castellations 30. The castellations all end on a common plane A together with the circles 27. The castellations 30 and circles 27 form active welding areas which are separated by inset non-active areas or lands 31. These rows of castellations 30 help to secure the overlay to the base layer and closely mimic the intersecting rows of stitching which are often found on real and simulated leather vehicle trims.

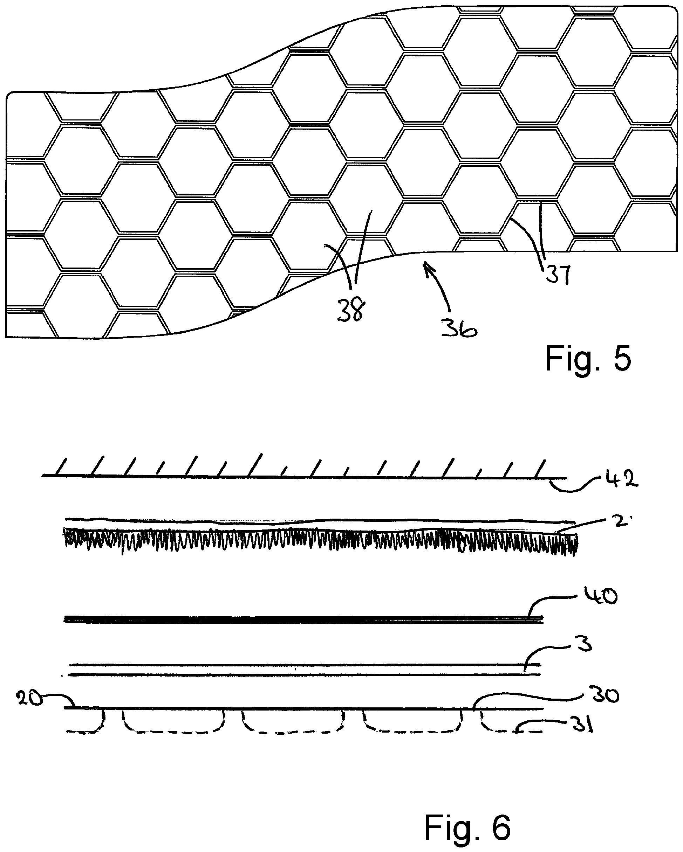

Although the die having a pattern shown in **Fig.s 2-4** is preferred other patterns can be used. For example, **Fig. 5** shows a second die 36 which has raised hexagonal areas crating a peripheral area 4 with a 3-dimensional honeycomb pattern. Again, the lines 37 which create the hexagonal pattern may be formed by raised active welding areas with rows of castellations and intervening non-active lands 38.

**Fig. 6** shows how the HFW die of **Fig.s 2-4** is used in forming a peripheral area 4. The various layers are shown separated for clarity but they are of course in contact during the welding process. A suitably sized piece of the overlay 3 is laid onto an appropriate area of the HFW die 20. Where the overlay has a surface which is textured to mimic real leather this is placed face down in contact with the HFW die.

A hot melt adhesive laminate sheet 40 is placed on top of the piece of overlay 3.

The pre-shaped base layer 2 is placed onto the hot melt adhesive laminate sheet 40 with its fibrous surface downwards, and the position of the mat is carefully adjusted so that the required peripheral area 4 covers the appropriate portion of the HFW die 20 with the overlay 3 and adhesive laminate 40 interposed.

A metal contact plate 42 is placed onto the article above the HFW die 20 to direct energy through the die and prevent arcing during the welding process. High frequency electrical current is then passed through the HFW die to melt the hot melt adhesive laminate 40 and bond the overlay 3 to the corresponding overlying areas of the base layer. During this process the raised active areas 30 of the die press the overlay 3 into the fibrous surface of the base layer 2 and areas of the overlay which overlie the non-active areas 31 of the die maintain a greater separation from the backing material of the base layer.

When the bonding process is complete the edges of the overlay 3 which overhang the shaped peripheral edge of the base layer are trimmed off.

It will be appreciated that the overlay 3 could extend up to the entire periphery of the base layer 2, covering the entire upper surface of the base layer, for example, where a particular application requires the entire top surface of the mat to be water-repellent.

### INSET AREAS:

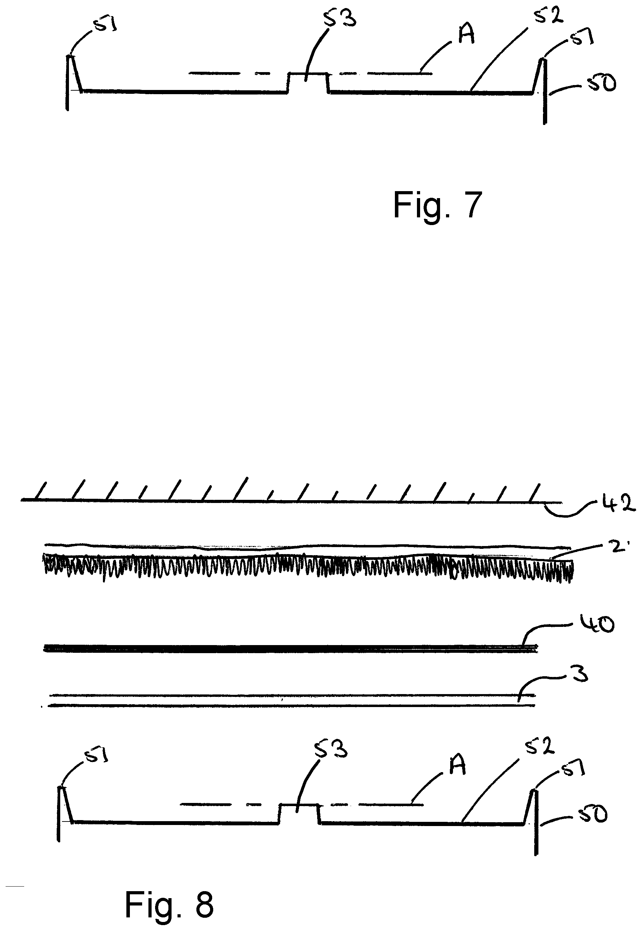

The inset area 5 is produced using a different HFW tool, and embodiment of which is shown in the cross-sectional view of **Fig. 7****.** In this case the HFW tool 50 is of a suitable size and shape to cover an inset area 5 lying entirely within, and inset from, the peripheral areas of the base layer 2. A single tool which is smaller than the periphery of the smallest mat to be produced can be used with any larger mat. The tool shown in **Fig. 7** has a continuous relatively sharp edge 51 which is shaped to bite into the sheet of overlay 3 during the HFW welding process. Although one edge 51 is shown in the drawing it will be appreciated that the tool may have a number of such edges to define several discrete sections of the inset area 5. Within the continuous edge 51 there is a recessed non-active area or land 52. In some embodiments the lands 52 may incorporate flat-topped active welding areas 53 which are raised above the lands 52 ending on a common plane A. These active welding areas do not project above the continuous cutting edge 51, but they form patterns within the individual sections of the inset area 5, such as the circles seen in **Fig. 1****,** and help to secure the overlay to the base layer.

**Fig. 8** shows how the HFW die 50 is used in forming the inset area 5. A suitably sized piece of the overlay 3 is laid onto an appropriate area of the HFW die 50. Where the overlay has a surface which is textured to mimic real leather this is placed face down in contact with the HFW die. A hot melt adhesive laminate sheet 40 is placed on top of the piece of overlay 3. The pre-shaped base layer 2 is placed onto the hot melt adhesive laminate sheet 40 with its fibrous surface downwards, and the position of the mat is carefully adjusted so that the required inset area 5 covers the appropriate portion of the HFW die 20 with the overlay 3 and adhesive laminate 40 interposed. A metal contact plate 42 is placed onto the article above the HFW die 50 to direct energy through the die and prevent arcing during the welding process. Electrical current is then passed through the HFW die to melt the hot melt adhesive laminate 40 and bond the overlay 3 to the corresponding overlying areas of the base layer. During this process raised active areas 53 of the die press the overlay 3 into the fibrous covering of the base layer, and areas of the overlay which overlie the non-active areas 52 of the die maintain a greater separation from the backing material of the base layer2.

In the course of the welding process the cutting edge 51 bites into the overlay 3 producing a line of weakness which defines the individual sections of the inset area 5. When the bonding process is complete the portion of the overlay 3 lying outside the individual sections of the inset area 5 can be torn away leaving just the required inset areas themselves which are firmly bonded to the base layer.

To finish the mat the edge binding 6 is attached around the periphery of the mat using sowing or other means of attachment.

Apart from enhancing the appearance of the mat in a manner which can closely mimic or complement real leather, the overlay provides a tough, waterproof wearing surface which enables the most used areas of the mat to be kept clean and dirt-free, being easily wiped clean with a damp cloth. The manufacturing process also enables the overlay to be applied to a multitude of shapes and configurations of mat using just one or two HFW tools, without requiring a different set of tools to be produced for each mat. The design of the mat may be enhanced by using an overlay of a different colour from the base layer. For example, the base layer may be red and the overlay black. The invention also enables printed matter to be applied to the overlay if desired, using suitable vinyl printing techniques.

The configuration of the die described in relation to **Fig.s 2-4** ensures that an effective bond is achieved between the overlay and the base mat whilst ensuring that portions of the die which lie outside the periphery of the base mat are not subject to any risk of arcing, overheating or wasted energy during the welding process.

## Claims

1. A method of manufacturing an article for use in a vehicle:
- pre-forming a base layer (2) from a sheet which includes a flexible fibrous material to provide the base layer with a defined peripheral profile;
- placing an overlay (3) of smooth non-porous polymer material onto an HFW (high frequency welding) die, said HFW die having an upper contact surface which includes active welding areas for contact with the overlay and inset non-active areas which are spaced from the overlay;
- covering the overlay with a hot melt adhesive laminate (40);
- placing the pre-formed base layer onto the hot melt adhesive laminate such that the overlay covers at least part of the pre-formed base layer;
- placing a metal contact plate (42) onto the base layer above the HFW die;
- applying electrical power to the HFW die to cause the hot melt adhesive laminate to melt and bond areas of the overlay in contact with the active welding areas of the die to the corresponding overlying areas of the pre-formed base layer;
- wherein the active welding areas of the HFW die comprise lines (25, 26; 37) of discrete active welding areas (30) which are separated by spaces (31);
***characterised in that*** the pre-formed base layer (2) is positioned such that the overlay (3) extends beyond at least one peripheral edge of the base layer.

2. A method according to Claim 1 in which each of the lines of discrete active welding areas has a double row (28, 29) of discrete active welding areas separated by spaces.

3. A method according to Claim 1 in which the lines of discrete active welding areas are arranged in two intersecting sets of parallel lines (25, 26).

4. A method according to Claim 1 in which parts of the overlay which extend beyond the peripheral profile of the base layer are trimmed to the peripheral profile of the base layer after the overlay has been bonded to the base layer.

5. A method according to Claim 4 in which an edge binding (6) is applied around the peripheral edges of the base layer and the trimmed areas of the overlay.

6. A method according to Claim 1 in which the overlay is a vinyl polymer.

7. An article for use in a vehicle:
- a base layer (2) which includes a flexible fibrous material, said base layer having a defined peripheral profile;
- an overlay (3) of smooth non-porous polymer material which is bonded by HFW (high frequency welding) to selected areas of the flexible fibrous material using a hot melt adhesive (40);
- wherein the overlay has lines (25, 26) of discrete welding areas (30) which are separated by spaces (31);
***characterised in that*** the overlay is bonded to an area of the base layer which extends up to at least part of the peripheral profile of the base layer.

8. An article according to Claim 7 in which each of the lines of discrete welding areas has a double row of discrete active welding areas separated by spaces.

9. An article according to Claim 7 in which the lines of discrete welding areas are arranged in two intersecting sets of parallel lines.

10. An article according to Claim 7 in which the overlay is a vinyl polymer.

## Patentansprüche

1. Verfahren zur Herstellung eines Artikels zur Verwendung in einem Fahrzeug:
- Vorformen einer Basisschicht (2) aus einer Folie, die ein flexibles Fasermaterial enthält, um der Basisschicht ein definiertes Umfangsprofil zu verleihen;
- Platzieren einer Auflage (3) aus glattem, nicht porösem Polymermaterial auf einer HFW-(Hochfrequenzschweiß-)Form, wobei die HFW-Form eine obere Kontaktfläche aufweist, die aktive Schweißbereiche für den Kontakt mit der Auflage und eingelassene, nicht aktive Bereiche aufweist, die von der Auflage beabstandet sind;
- Bedecken der Auflage mit einem Schmelzklebstofflaminat (40);
- Platzieren der vorgeformten Basisschicht auf dem Schmelzklebstofflaminat, so dass die Auflage zumindest einen Teil der vorgeformten Basisschicht bedeckt;
- Platzieren einer Metallkontaktplatte (42) auf der Basisschicht über der HFW-Form;
- Anlegen von elektrischer Energie an die HFW-Form, um das Schmelzklebstofflaminat zum Schmelzen zu bringen und Bereiche der Auflage, die mit den aktiven Schweißbereichen der Form in Kontakt stehen, mit den entsprechenden darüber liegenden Bereichen der vorgeformten Basisschicht zu verbinden;
- wobei die aktiven Schweißbereiche der HFW-Matrize Linien (25, 26; 37) diskreter aktiver Schweißbereiche (30) umfassen, die durch Zwischenräume (31) getrennt sind;
**dadurch gekennzeichnet, dass** die vorgeformte Basisschicht (2) so positioniert ist, dass die Auflage (3) über mindestens eine Randkante der Basisschicht hinausragt.

2. Verfahren nach Anspruch 1, bei dem jede der Linien diskreter aktiver Schweißbereiche eine Doppelreihe (28, 29) diskreter aktiver Schweißbereiche aufweist, die durch Zwischenräume getrennt sind.

3. Verfahren nach Anspruch 1, bei dem die Linien diskreter aktiver Schweißbereiche in zwei sich kreuzenden Sätzen paralleler Linien (25, 26) angeordnet sind.

4. Verfahren nach Anspruch 1, bei dem Teile der Auflage, die über das Randprofil der Basisschicht hinausragen, auf das Randprofil der Basisschicht zugeschnitten werden, nachdem die Auflage mit der Basisschicht verbunden wurde.

5. Verfahren nach Anspruch 4, bei dem eine Randeinfassung (6) um die Randkanten der Basisschicht und die zugeschnittenen Bereiche der Auflage angebracht wird.

6. Verfahren nach Anspruch 1, bei dem die Auflage ein Vinylpolymer ist.

7. Artikel zur Verwendung in einem Fahrzeug:
- eine Basisschicht (2), die ein flexibles Fasermaterial umfasst, wobei die Basisschicht ein definiertes Randprofil aufweist;
- eine Auflage (3) aus glattem, nicht porösem Polymermaterial, die durch HFW (Hochfrequenzschweißen) mit ausgewählten Bereichen des flexiblen Fasermaterials unter Verwendung eines Schmelzklebstoffs (40) verbunden ist;
- wobei die Auflage Linien (25, 26) diskreter Schweißbereiche (30) aufweist, die durch Zwischenräume (31) getrennt sind;
**dadurch gekennzeichnet, dass** die Auflage mit einem Bereich der Basisschicht verbunden ist, der sich bis zu mindestens einem Teil des Randprofils der Basisschicht erstreckt.

8. Ein Artikel nach Anspruch 7, bei dem jede der Linien diskreter Schweißbereiche eine Doppelreihe diskreter aktiver Schweißbereiche aufweist, die durch Zwischenräume voneinander getrennt sind.

9. Ein Artikel nach Anspruch 7, bei dem die Linien diskreter Schweißbereiche in zwei sich kreuzenden Sätzen paralleler Linien angeordnet sind.

10. Ein Artikel nach Anspruch 7, bei dem die Auflage ein Vinylpolymer ist.

## Revendications

1. Procédé de fabrication d'un article destiné à être utilisé dans un véhicule:
- préformer une couche de base (2) à partir d'une feuille qui comprend un matériau fibreux flexible pour conférer à la couche de base un profil périphérique défini;
- placer un revêtement (3) de matériau polymère non poreux lisse sur une matrice HFW (soudage haute fréquence), ladite matrice HFW ayant une surface de contact supérieure qui comprend des zones de soudage actives pour le contact avec le revêtement et des zones non actives insérées qui sont espacé de la superposition;
- recouvrir le revêtement avec un stratifié adhésif thermofusible (40);
- placer la couche de base préformée sur le stratifié adhésif thermofusible de telle sorte que le revêtement recouvre au moins une partie de la couche de base préformée;
- placer une plaque de contact métallique (42) sur la couche de base au-dessus de la puce HFW;
- appliquer une puissance électrique à la puce HFW pour faire fondre le stratifié adhésif thermofusible et lier les zones du revêtement en contact avec les zones de soudage actives de la matrice aux zones sus-jacentes correspondantes de la couche de base préformée;
- dans lequel les zones de soudage actives de la matrice HFW comprennent des lignes (25, 26; 37) de zones de soudage actives discrètes (30) qui sont séparées par des espaces (31);
**caractérisé en ce que** la couche de base préformée (2) est positionnée de telle sorte que le revêtement (3) s'étend au-delà d'au moins un bord périphérique de la couche de base.

2. Procédé selon la revendication 1, dans lequel chacune des lignes de zones de soudage actives discrètes comporte une double rangée (28, 29) de zones de soudage actives discrètes séparées par des espaces.

3. Procédé selon la revendication 1, dans lequel les lignes de zones de soudage actives discrètes sont disposées en deux ensembles sécants de lignes parallèles (25, 26).

4. Procédé selon la revendication 1, dans lequel les parties du revêtement qui s'étendent au-delà du profil périphérique de la couche de base sont découpées jusqu'au profil périphérique de la couche de base après que le revêtement ait été lié à la couche de base.

5. Procédé selon la revendication 4, dans lequel une bordure (6) est appliquée autour des bords périphériques de la couche de base et des zones découpées du revêtement.

6. Procédé selon la revendication 1, dans lequel le revêtement est un polymère vinylique.

7. Un article destiné à être utilisé dans un véhicule:
- une couche de base (2) qui comprend un matériau fibreux flexible, ladite couche de base ayant un profil périphérique défini;
- un revêtement (3) de matériau polymère lisse non poreux qui est lié par HFW (soudage haute fréquence) à des zones sélectionnées du matériau fibreux flexible à l'aide d'un adhésif thermofusible (40);
- dans lequel le revêtement comporte des lignes (25, 26) de zones de soudage discrètes (30) qui sont séparées par des espaces (31);
**caractérisé en ce que** le revêtement est lié à une zone de la couche de base qui s'étend jusqu'à au moins une partie du profil périphérique de la couche de base.

8. Article selon la revendication 7, dans lequel chacune des lignes de zones de soudage discrètes comporte une double rangée de zones de soudage actives discrètes séparées par des espaces.

9. Article selon la revendication 7, dans lequel les lignes de zones de soudage discrètes sont disposées en deux ensembles de lignes parallèles qui se croisent.

10. Article selon la revendication 7, dans lequel le revêtement est un polymère vinylique.
